# EUROPÄISCHE PATENTANMELDUNG

(11) **EP 4 467 391 A1**
(43) Veröffentlichungstag der Anmeldung: **27.11.2024**
(21) Anmeldenummer: 24173449.0
(22) Anmeldetag: 30.04.2024
(51) Int. Cl.: B60P 3/36, B60R 15/02

(54) **CAMPINGFAHRZEUG**

(30) Priorität: 24.05.2023 DE 102023113607
(71) Anmelder: Knaus Tabbert AG, 94118 Jandelsbrunn (DE)
(72) Erfinder: Thaler, Jürgen, 94164 Sonnen (DE)
(74) Vertreter: advotec.

(57) **Zusammenfassung**

Die Erfindung betrifft ein Campingfahrzeug, insbesondere Wohnwagen, Wohnmobil, Campingbus oder dergleichen mit einem Fahrzeuginnenraum (1), welcher einen eine Dusche aufweisenden Sanitärabschnitt (2) und einen Wohnabschnitt (3) umfasst, wobei der Sanitärabschnitt (2) und der Wohnabschnitt (3) durch ein faltbares Trennwandelement (6) mindestens teilweise voneinander abtrennbar sind, wobei das Trennwandelement (6) an seiner Außenseite (7) mit einem horizontal verschiebbaren Möbelelement (8) des Wohnabschnitts (3) verbunden ist und durch Auffalten von einer Ruhestellung, in der eine Duschfläche (10) vom verschiebbaren Möbelelement (8) mindestens teilweise überdeckt ist und sich im Bereich des Wohnabschnitts (3) befindet, in eine Duschstellung, in welcher das Trennwandelement (6) die sich nun im Sanitärabschnitt (2) befindende Duschfläche (10) mindestens teilweise umgrenzt und das verschiebbare Möbelelement (8) außerhalb der Duschfläche (10) angeordnet ist, überführbar ist, wobei das Möbelelement (8) beim Auffalten des Trennwandelements (6) aus dem Bereich der Duschfläche (10) bewegt und beim Zusammenfalten des Trennwandelements (6) in den Bereich der Duschfläche (10) zurückbewegt wird.

## Beschreibung

Die vorliegende Erfindung betrifft ein Campingfahrzeug, insbesondere Wohnwagen, Wohnmobil, Campingbus oder dergleichen mit einem Fahrzeuginnenraum, welcher einen Sanitärabschnitt und einen Wohnabschnitt umfasst, wobei der Sanitärabschnitt und der Wohnabschnitt durch ein faltbares Trennwandelement mindestens teilweise voneinander abtrennbar sind.

Derartige Campingfahrzeuge sind aus dem Stand der Technik bekannt. In diesen Fahrzeugen ist der zur Verfügung stehende Platz meist sehr begrenzt. Es besteht daher der Wunsch, den verfügbaren Raum möglichst gut zu nutzen, wobei die unterschiedlichen Räume, wie beispielsweise Sanitär- und Wohnraum in platzsparender Weise miteinander kombiniert sind. Aufgrund des beschränkten Platzangebotes in Campingfahrzeugen wird der Sanitärraum, welcher i. d. R. eine Toilette, ein Waschbecken und eine Dusche umfasst, häufig sehr klein ausgeführt, was dazu führt, dass dem Benutzer in diesem Raum aufgrund der vorhandenen Sanitärgegenstände kaum Raum zur Bewegung verbleibt.

Zudem ergeben sich auch im Campingfahrzeugbereich, insbesondere im Wohnwagensegment neue Herausforderungen durch vollelektrische Zugfahrzeuge. So hängt die Reichweite des Zugfahrzeugs unter anderem von der Stirnfläche des Anhängers ab. Durch eingeschränkte Anhängelasten der E-Fahrzeuge ist es auch nicht mehr möglich, Wohnwägen mit hohem Volumen und Gewicht zu ziehen. Aus diesem Grunde muss zum einen die Stirn- und Grundfläche reduziert werden, zum anderen auch das Gewicht der Fahrzeuge. Ein Grundziel besteht daher darin, bei möglichst kleiner Grundfläche des Fahrzeugs möglichst viel Nutzfläche zur Verfügung zu stellen.

In Campingfahrzeugen ist es ferner üblich, dass immer eine Duschmöglichkeit vorgesehen ist. Zumindest ist meist eine Duschwanne vorgesehen, weshalb die Sanitärräume in Campingfahrzeugen meist größer dimensioniert sind, um eine ausreichende Stehfläche dafür bieten zu können.

Der vorliegenden Erfindung liegt die Aufgabe zu Grunde, ein Campingfahrzeug zur Verfügung zu stellen, welches die genannten Nachteile überwindet. Der Erfindung liegt insbesondere die Aufgabe zu Grunde, ein Campingfahrzeug zur Verfügung zu stellen, bei dem trotz eines großzügig angelegten Sanitärraums wenig Abstriche hinsichtlich des Platzangebots im Wohnabschnitt gemacht werden müssen und die Größe und die Grundfläche des Campingfahrzeuges reduziert werden können.

Diese Aufgabe wird durch ein Campingfahrzeug der eingangs genannten Art gelöst, bei dem gemäß Anspruch 1 das Trennwandelement an seiner Außenseite mit einem horizontal verschiebbaren Möbelelement des Wohnabschnitts verbunden ist und durch Auffalten von einer Ruhestellung, in der eine Duschfläche vom verschiebbaren Möbelelement mindestens teilweise überdeckt ist und sich im Bereich des Wohnabschnitts befindet, in eine Duschstellung, in welcher das Trennwandelement die sich nun im Sanitärabschnitt befindenden Duschfläche mindestens teilweise umgrenzt und das Möbelelement außerhalb von der Duschfläche angeordnet ist, überführbar ist, und wobei das verschiebbare Möbelelement beim Auffalten des Trennwandelements aus dem Bereich der Duschfläche bewegt und beim Zusammenfalten des Trennwandelements in den Bereich der Duschfläche zurückbewegt wird. Die Duschfläche wird in aller Regel von einer Duschwanne gebildet.

Durch die erfindungsgemäße Kombination eines faltbaren Trennwandelements und eines mit diesem verbundenen und bewegbaren Möbelelements lässt sich der Raum im erfindungsgemäßen Campingfahrzeug optimal ausnutzen. Wird beim erfindungsgemäßen Campingfahrzeug ein Sanitärraum lediglich für den Toilettengang oder zum Benutzen eines Wachbeckens benötigt, so verbleibt das Trennwandelement in einer zusammengefalteten Ruhestellung, in welcher der Sanitärabschnitt einen nur sehr kleinen Raum einnimmt. Vorliegend wird durch das Trennwandelement, welches eine Trennlinie zwischen Sanitär- und Wohnabschnitt bildet, definiert, welcher Raum dem Sanitärabschnitt und welcher Raum dem Wohnabschnitt zuzuordnen ist. Erst dann, wenn der Sanitärabschnitt auch zum Duschen verwendet werden soll, wird das Trennwandelement aufgefaltet, so dass es in der komplett aufgefalteten Duschstellung einen wesentlich größeren Raum für den Sanitärabschnitt definiert. Ein Clou der Erfindung besteht darin, dass beim Auffalten des Trennwandelements das horizontal verschiebbare Möbelelement verschoben wird und eine weitere Fläche, nämlich eine Duschfläche für den Sanitärabschnitt freigibt. Ein Teil der nun vom Trennwandelement umgrenzten Fläche des Sanitärabschnitts ist also in der Ruhestellung Teil des Wohnabschnitts, in welcher dieser Teil der Fläche vom verschiebbaren Möbelelement beansprucht werden kann.

Bei einer besonders bevorzugten Ausführungsform des erfindungsgemäßen Campingfahrzeugs wird das verschiebbare Möbelelement beim Überführen des Trennwandelements von einer Ruhestellung in eine Duschstellung in, über oder unter ein benachbart angeordnetes, insbesondere ein fahrzeugfest verbautes zweites Möbelelement, insbesondere eine Sitz- oder Liegebank, bewegt. Damit wird der zur Verfügung stehende Platz noch optimaler ausgenutzt. In der Ruhestellung lassen sich bei dieser Ausführungsform das verschiebbare Möbelelement und das benachbart angeordnete, fahrzeugfest verbaute zweite Möbelelement vorzugsweise zu einem gesamten Möbel mit großer Sitz- bzw. Liegefläche kombinieren.

Bei einer besonders bevorzugten Ausführungsform des erfindungsgemäßen Campingfahrzeugs umfasst das Trennwandelement einen mit dem horizontal verschiebbaren Möbelelement des Wohnabschnitts verbundenen Basisabschnitt sowie zwei gelenkig mit dem Basisabschnitt verbundene Seitenabschnitte, welche Seitenabschnitte vorzugsweise jeweils zwei gelenkig miteinander verbundene Teilabschnitte umfassen, wobei ein erster Teilabschnitt eines ersten Seitenabschnitts mit einem fahrzeugfest angeordneten Wandelement gelenkig verbunden ist und ein erster Teilabschnitt eines zweiten Seitenabschnittes mit einem weiteren fahrzeugfest angeordneten Haltelement, insbesondere Wandelement gelenkig verbunden ist, wobei das Wandelement vorzugsweise eine Türe aufweist und mit dem Trennwandelement vorzugsweise eine vollständige Trennwand zum Abtrennen des Sanitärabschnitts vom Wohnabschnitt bildet. Ein derart aufgebautes Trennwandelement lässt sich optimal zusammenfalten, um in eine Ruhestellung verbracht zu werden, sowie optimal auffalten, um in eine Duschstellung verbracht zu werden. Gerade in Kombination mit dem fahrzeugfest angeordneten Wandelement lässt sich auf ideale Art und Weise ein Sanitärabschnitt schaffen, welcher je nach Stellung des Trennwandelements größer (Duschstellung) oder kleiner (Ruhestellung) ausgebildet ist.

Mit Vorteil sind die Seitenabschnitte mit dem Basisabschnitt und dem fahrzeugfest angeordneten Wandelement bzw. dem Halteelement über flexible, vorzugsweise wasserdichte Profile schwenkbar verbunden, wobei vorzugsweise auch die Teilabschnitte eines Seitenabschnitts über solche Profile miteinander verbunden sind. In der Regel bestehen diese Profile aus co-extrudierten Kunststoffen unterschiedlicher Härte oder aus Metall, z.B. Aluminium. In der Regel entsprechen die Längen dieser Profile den Längen der jeweiligen Elemente des Trennwandelements. Durch derartige Profile lässt sich eine insgesamt blickdichte und wasserundurchlässige Duschtrennwand schaffen.

Alternativ zu dieser Ausführungsform können geschlitzte Sandwichplatten mit flexiblem Kern zur Herstellung eines Trennwandelements verwendet werden.

Bei einer besonders bevorzugten Ausführungsform des erfindungsgemäßen Campingfahrzeugs umfasst das horizontal verschiebbare Möbelelement mindestens eine parallel zu einem Fahrzeugboden angeordnete und vorzugsweise eine Sitzfläche bildende Horizontalplatte, wobei die mindestens eine Horizontalplatte vorzugsweise mit dem Trennwandelement verbunden ist, wobei die mindestens eine Horizontalplatte vorzugsweise in mindestens einer, vorzugsweise zwei parallel zum Fahrzeugboden angeordneten Führungsschiene geführt ist. Bei dieser Ausführungsform kann ein verschiebbares Sitzmöbel in einer Ruhestellung des Trennwandelements als solches genutzt werden. Beim Überführen des Trennwandelements von der Ruhestellung in die Duschstellung kann das verschiebbare Möbelelement entlang der Führungsschienen entsprechend verfahren und verstaut werden.

Alternativ zu einer einfachen Platte kann als "Horizontalplatte" für einen besseren Sitz- und Liegekomfort auch ein Rahmen mit Lattenrost oder Tellerfeder eingesetzt werden.

In der Regel ist das Trennwandelement an seinem unteren Ende mit mindestens einem Stabilisierungselement, insbesondere mit zwei vertikal angeordneten Stabilisierungsplatten verbunden, wobei das Trennwandelement an einem oberen Ende vorzugsweise mit einer Stabilisierungstraverse verbunden ist. Durch diese Stabilisierungselemente bzw. Stabilisierungstraverse wird das Trennwandelement in Position gehalten und stabilisiert.

Mit Vorteil ist das Trennwandelement sowohl in der Ruhestellung als auch in der Duschstellung arretierbar, insbesondere mittels eines Magneten arretierbar oder fixierbar. Dies erhöht weiter die Stabilität des Trennwandelements in der jeweiligen Stellung.

Eine Weiterbildung des erfindungsgemäßen Campingfahrzeugs ist gekennzeichnet durch ein im Sanitärabschnitt angeordnetes Waschbecken, welches analog einer Schublade von einer Ruhestellung, in welcher sich das Waschbecken in einem Aufnahmekasten mit einer vorzugsweise eine Ablagefläche bildenden Deckplatte befindet, in eine Gebrauchsstellung, in welcher sich das Waschbecken mindestens teilweise außerhalb des Aufnahmekastens befindet, verfahrbar ist. Mit einem derartigen Waschbecken lässt sich der vorhandene Platz weiter optimieren. So kann in Ruhestellung des Waschbeckens der frei gewordene Raum anderweitig als zusätzlicher Stauraum über dem eigentlichen Waschbecken oder Nutzfläche, wie beispielsweise als weitere Duschfläche, genutzt werden. Des Weiteren ist es vorteilhaft, wenn sich das Waschbecken in der Gebrauchsstellung über einer sich ebenfalls im Sanitärabschnitt befindenden Toilettenschüssel befindet. In der Ruhestellung wird dann der Platz oberhalb der Toilettenschüssel freigegeben, so dass dieser Raum dann für einen Toilettengang genutzt werden kann.

Mit Vorteil ist das horizontal verschiebbare Möbelelement zur Verlängerung einer Liegefläche an einer Seite mit einem zweiten horizontal verschiebbaren Möbelelement kombinierbar. Dadurch kann eine Sitzfläche des horizontal verschiebbaren Möbelelements zu einer Liegefläche verlängert werden. So kann das horizontal verschiebbare Möbelelement von einem Sitzmöbel in ein Bett verwandelt werden.

Eine Weiterbildung des erfindungsgemäßen Campingfahrzeugs ist gekennzeichnet durch ein an einer dem Basisabschnitt des Trennwandelements gegenüberliegenden Wand angeordnetes Klappbett, welches zur Überführung von einer Ruhestellung in eine Gebrauchsstellung abklappbar ist.

Die vorliegende Erfindung betrifft ferner eine Trennwand für ein Campingfahrzeug, umfassend einen Basisabschnitt sowie zwei gelenkig mit dem Basisabschnitt verbundene Seitenabschnitte, welche Seitenabschnitte jeweils zwei gelenkig miteinander verbundene Teilabschnitte umfassen, wobei ein erster Teilabschnitt eines ersten Seitenabschnitts mit einem fahrzeugfest angeordneten Wandelement gelenkig verbindbar ist und ein erster Teilabschnitt eines zweiten Seitenabschnitts mit einem weiteren fahrzeugfest angeordneten Halteelement gelenkig verbindbar ist.

Die vorliegende Erfindung betrifft ferner ein Waschbecken für ein Campingfahrzeug, welches in einem Aufnahmekasten angeordnet ist und von einer Ruhestellung, in welcher sich das Waschbecken im Aufnahmekasten befindet, in eine Gebrauchsstellung, in welcher sich das Waschbecken mindestens teilweise außerhalb des Aufnahmekastens befindet, analog einer Schublade bewegbar ist.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.
- Figuren 1a bis 1c:: eine Draufsicht auf den Sanitärabschnitt und den angrenzenden Wohnabschnitt eines erfindungsgemäßen Campingfahrzeuges mit unterschiedlichen Stellungen des Trennwandelements;
- Figuren 2a bis 2c:: perspektivische Darstellungen der in den Figuren 1a bis 1c darge-stellten Situationen;

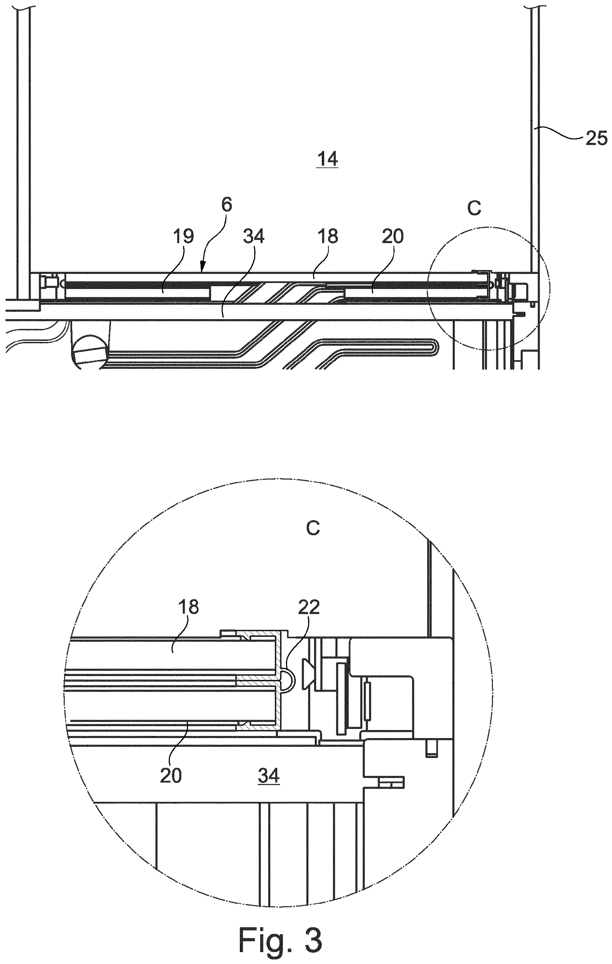

- Figur 3:: eine vergrößerte Darstellung von Figur 1a im Bereich des Trennwandelements;
- Figur 4:: ein vergrößerter Ausschnitt aus der Figur 1c im Bereich des Trennwandelements;
- Figur 5a:: eine perspektivische Darstellung der Situation gemäß Figur 2a mit weggelassenem Sitzpolster und ohne Stabilisierungsplatte;
- Figur 5b:: ein vergrößerter Ausschnitt aus dem unteren Bereich des Trennwandelements (hier mit Stabilisierungsplatte);
- Figur 6a:: eine Draufsicht auf den Sanitärabschnitt gemäß Figur 1a mit eingefahrenem Waschbecken;
- Figur 6b:: eine Draufsicht auf den Sanitärabschnitt gemäß Figur 1a mit ausgefahrenem Waschbecken;
- Figuren 7a, 7b:: perspektivische Darstellungen der Situationen der Figuren 6a und 6b;
- Figur 8a:: eine Draufsicht auf den Sanitärabschnitt gemäß Figur 1a sowie den daran angrenzenden Wohnbereich;
- Figur 8b:: eine Draufsicht gemäß Figur 8a mit ausgezogenem Bettteil;
- Figuren 9a, 9b:: perspektivische Darstellungen der Situationen gemäß Figuren 8a und 8b;
- Figuren 10a, 10b:: Draufsicht sowie perspektivische Darstellung einer weiteren Ausführungsform mit ausgeklapptem Klappbett.

Nachfolgend werden gleiche oder funktionsgleiche Elemente mit den gleichen Bezugsziffern versehen.

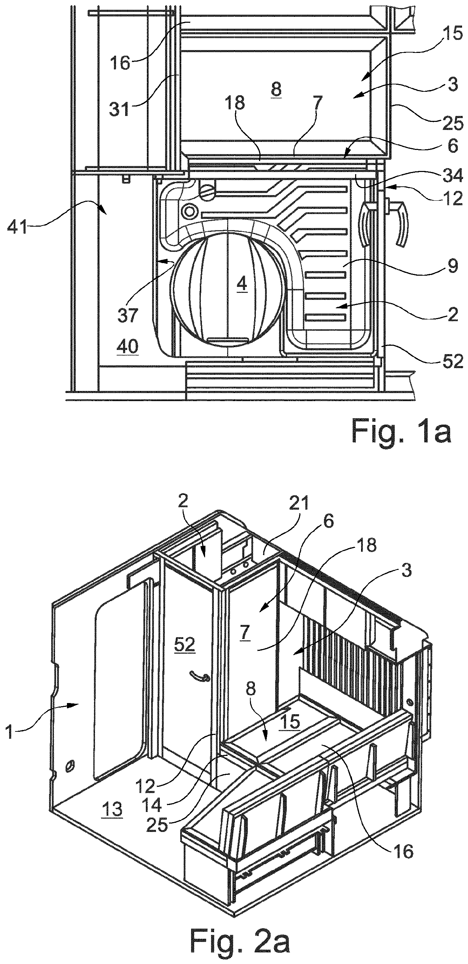

Zunächst wird anhand der Figuren 1a bis 1c sowie 2a bis 2c das variable Raumkonzept des erfindungsgemäßen Campingfahrzeugs näher illustriert.

Das erfindungsgemäße Campingfahrzeug weist einen Fahrzeuginnenraum 1 auf, welcher einen Sanitärabschnitt 2 und einen Wohnabschnitt 3 umfasst. Der Sanitärabschnitt 2 umfasst unter anderem eine Toilette 4 sowie ein ausziehbares Waschbecken, welches in einem Aufnahmekasten 38 untergebracht ist. Der Sanitärabschnitt 2 und der Wohnabschnitt 3 sind unter anderem durch ein faltbares Trennwandelement 6 voneinander abgetrennt. Das Trennwandelement 6 ist an seiner Außenseite 7 mit einem horizontal verschiebbaren Möbelelement 8 des Wohnabschnitts 3 verbunden. Der Sanitärabschnitt 2 weist einen Sanitärboden 9 auf, der in eine Duschfläche 10 einer Duschwanne 11 übergeht.

Die Figuren 1a und 2a zeigen die Situation, in welcher sich das Trennwandelement 6 und das Möbelelement 8 in einer Ruhestellung befinden. In dieser Ruhestellung ist das Trennwandelement 6 vollständig zusammengefaltet. In dieser Ruhestellung bildet das Trennwandelement 6 mit einem daran angrenzenden, fahrzeugfest angeordneten Wandelement 12 eine geschlossene Trennwand, welche den sich in einer Fahrzeugecke befindenden Sanitärabschnitt 2 vom Wohnabschnitt 3 vollständig abtrennt. In dieser Ruhestellung befindet sich eine parallel zum Fahrzeugboden 13 angeordnete Horizontalplatte 14 des Möbelelements 8 oberhalb der Duschfläche 10 und überdeckt diese. In der Ruhestellung ist die Duschfläche 10 also außerhalb des vom Trennwandelement 6 abgetrennten Sanitärabschnitt 2 angeordnet und befindet sich im Wohnabschnitt 3.

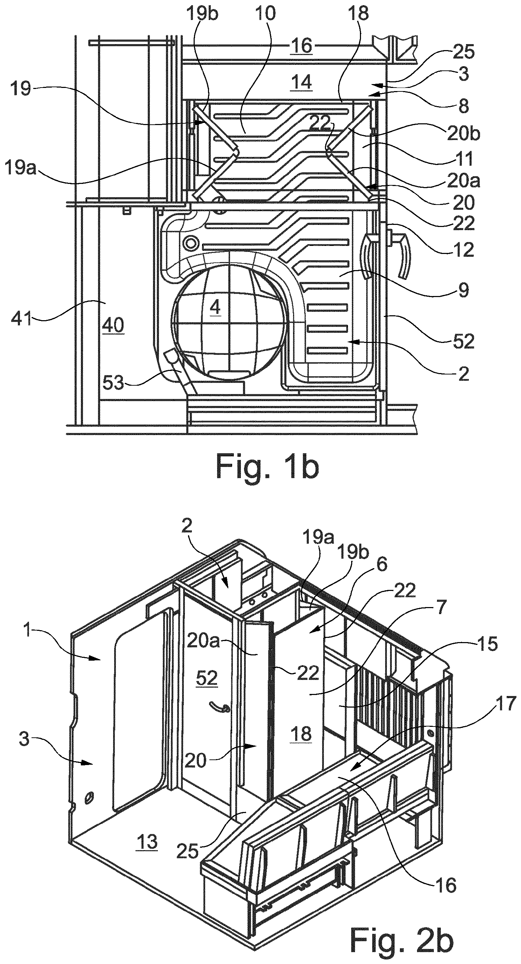

In den Figuren 1b und 2b wird nun die Überführung des Trennwandelements 6 von einer Ruhestellung in eine Duschstellung illustriert. Hierzu wird das Trennwandelement 6 durch das Drücken auf seine Innenseite in Richtung des Wohnabschnitts 3 aufgefaltet. Gleichzeitig mit diesem Auffalten des Trennwandelements 6 wird das Möbelelement 8 weiter in den Wohnabschnitt 3 verschoben. Hierbei erweitert sich also der Sanitärabschnitt 2 "auf Kosten" des Wohnabschnitts 3.

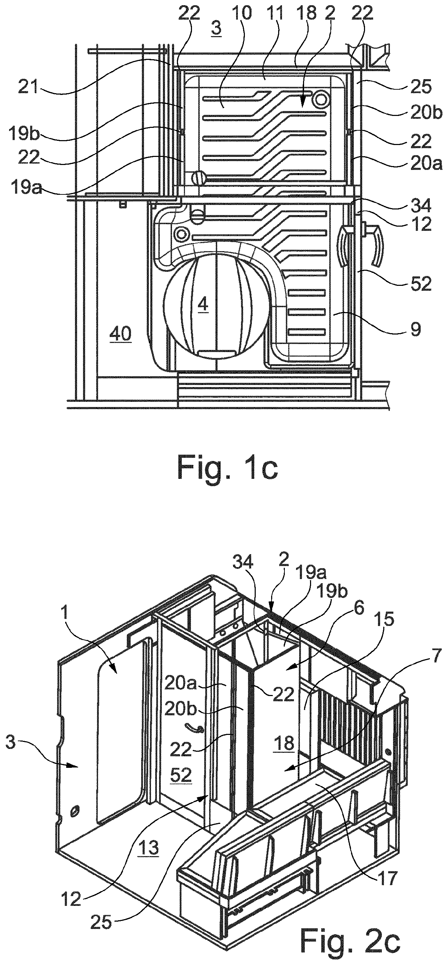

Die Figuren 1c und 2c zeigen das Trennwandelement 6 im vollständig aufgefalteten Zustand und damit in der Duschstellung. In dieser Duschstellung umgrenzt das Trennwandelement 6 die sich nun im Sanitärabschnitt 2 befindende Duschfläche 10, wobei nun die Horizontalplatte 14 des Möbelelements 8 außerhalb der Duschfläche 10 angeordnet ist und diese nicht mehr überdeckt. Somit steht in der Duschstellung des Trennwandelements 6 die gesamte Duschfläche 10 für eine sich duschende Person zur Verfügung. Nach dem Duschvorgang kann das Trennwandelement wieder entsprechend zusammengefaltet werden. Beim Zusammenfalten des Trennwandelements 6 wird das Möbelelement 8, welches mit dem Trennwandelement 6 verbunden ist, wieder in den Bereich der Duschfläche 10 bewegt, so dass der Bereich der Duschfläche wieder für den Wohnabschnitt 3 zur Verfügung steht.

In der Ruhestellung befindet sich auf der Horizontalplatte 14 ein Polster 15, welches mit dem Polster 16 eines benachbart angeordneten Liegemöbels 17 fluchtet. Beim Überführen des Trennwandelements von einer Ruhestellung in eine Duschstellung wird vorher das Polster 15 nach oben geklappt. Beim anschließenden Bewegen der Horizontalplatte 14 durch den Auffaltvorgang des Trennwandelements 6 wird diese Platte 14 in das Liegemöbel 17 bewegt und nimmt in der Duschstellung keinen weiteren Platz mehr in Anspruch.

Das Trennwandelement 6 umfasst einen mit dem horizontal verschiebbaren Möbelelement 8 verbundenen Basisabschnitt 18 sowie zwei gelenkig mit dem Basisabschnitt 18 verbundene Seitenabschnitte 19, 20. Die Seitenabschnitte 19 und 20 umfassen jeweils zwei gelenkig miteinander verbundene Teilabschnitte 19a, 19b bzw. 20a, 20b. Ein erster Teilabschnitt 19a des Seitenabschnitts 19 ist mit dem fahrzeugfest verbauten Wandelement 12 gelenkig verbunden. Ein erster Teilabschnitt 20a des Seitenabschnitts 20 ist mit einer Innenwand 21, welche ebenso fahrzeugfest angeordnet ist, gelenkig verbunden. Sowohl in Ruhestellung als auch in der Duschstellung bildet das Trennwandelement 6 mit dem Wandelement 12 eine Trennwand zum vollständigen Abtrennen des Sanitärabschnitts 2 vom Wohnabschnitt 3. Des Weiteren weist das Wandelement 12 eine Türe 52 auf, welcher es einer Bedienperson erlaubt, vom Wohnabschnitt 3 in den Sanitärabschnitt 2 bzw. umgekehrt zu gelangen.

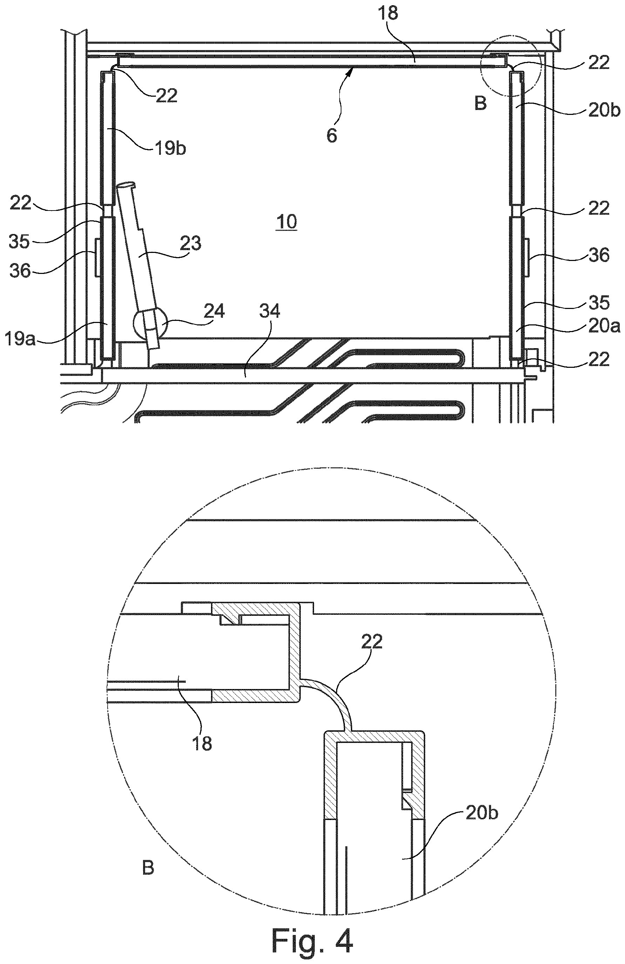

Die Seitenabschnitte 19 und 20 sind mit Basisabschnitt 18 und den fahrzeugfest angeordneten Wandelementen 12 bzw. 21 über flexible und wasserdichte Profile 22 schwenkbar verbunden. Auch die Teilabschnitte 19a und 19b sowie 20a und 20b sind über derartige Profile 22 miteinander schwenkbar verbunden. Die Profile 22 sind im vorliegenden Ausführungsbeispiel aus flexiblem Kunststoff gefertigt. Die Profile können jedoch auch aus anderen wasserdichten Materialien, wie beispielsweise Aluminium, bestehen. Ferner ist es denkbar, dass es sich bei den Seitenabschnitten um geschlitzte Sandwichplatten mit flexiblem Kern handelt. Die Länge der Profile 22 entspricht im Wesentlichen der Länge der einzelnen Elemente 18, 19, 20 des Trennwandelements 6. Figur 4 zeigt ferner einen sich im Bereich der Duschfläche 10 befindenden Duschkopf 23, welcher klappbar an einer Vertikalstange 24 angeordnet ist.

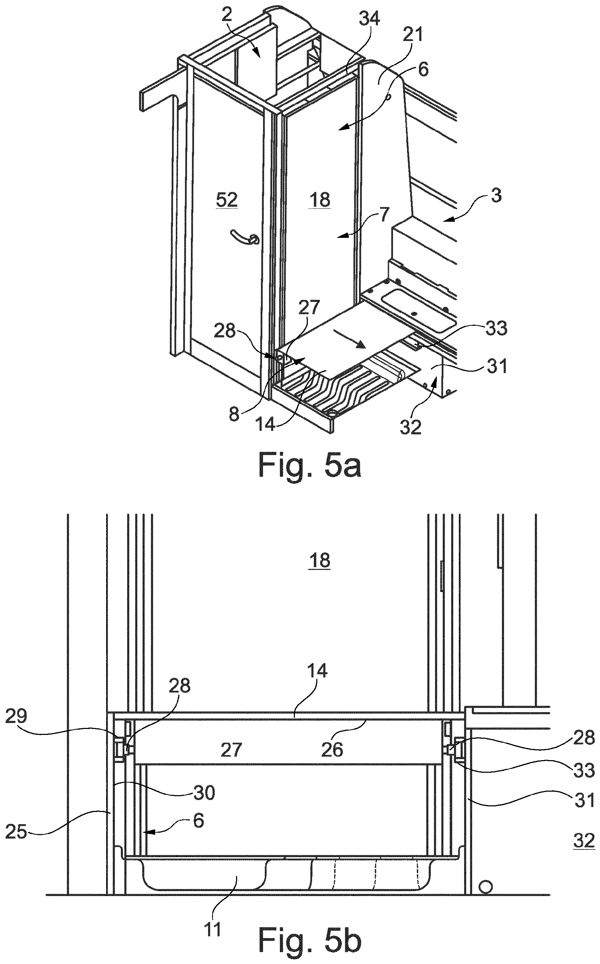

Figur 5a zeigt eine perspektivische Darstellung der Raumsituation, welche im Wesentlichen der Figur 2a entspricht. In der Figur 5a ist also das Trennwandelement 6 in Ruhestellung dargestellt. Im Unterschied zur Figur 2a zeigt die Figur 5a die Horizontalplatte 14 ohne darauf angeordnetem Polster 15. Auch die in den Figuren 2a bis 2c zu erkennende Führungs- und Stabilisierungsplatte 25 wurde in der Figur 5a aus Übersichtsgründen weggelassen. Dagegen ist in der Figur 5b die Führungs- und Stabilisierungsplatte wieder eingezeichnet.

Wie in den Figuren 5a und 5b zu erkennen ist, ist auf der Unterseite 26 der Horizontalplatte 14 des Möbelelements 8 ein Querbalken 27 angeordnet. Der Querbalken 27 weist an seinen beiden Stirnseiten jeweils einen Führungszapfen 28 oder eine Führungsrolle auf. An der Innenseite der Führungs- und Stabilisierungsplatte 25 ist eine parallel zum Fahrzeugboden 13 angeordnete Führungsschiene 29 angeordnet. Alternativ zur Platte 25 kann auch ein Rahmen verwendet werden. Auf einer der Innenseite 30 der Führungs- und Stabilisierungsplatte 25 gegenüberliegenden Seitenwand 31 eines Staufaches 32 ist eine weitere Führungsschiene 33 angeordnet. Die Führungsschiene 33 ist parallel zur und in der Regel auf gleicher Höhe wie die Führungsschiene 29 angeordnet. Die Führungszapfen 28 des Querbalkens 27 sind verfahrbar in den Führungsschienen 29 und 33 gelagert. Bei einem Überführen des Trennwandelements 6 von einer in Figur 5a dargestellten Ruhestellung in eine Duschstellung wird beim Auffalten des Trennwandelements 6 die Horizontalplatte 14 in einer durch den in Figur 5a dargestellten Pfeil angedeuteten Richtung horizontal bewegt, indem die Führungszapfen 28 in den Führungsschienen 29 und 33 in Pfeilrichtung verfahren werden. Die Platte 25 sowie die Seitenwand 31 dienen neben dem Befestigen der Führungsschienen 29 und 33 als Stabilisierungselemente für das Trennwandelement 6 im aufgefalteten Zustand. Als weiteres Stabilisierungselement dient die am oberen Ende des Trennwandelements 6 angeordnete Traverse 34, welche das Trennwandelement 6 in Position hält.

An den Außenseiten 35 der Seitenabschnitte 19 und 20 sind Magnete 36 angeordnet, mit Hilfe dieser das Trennwandelement 6 im aufgefalteten Zustand an einer metallischen Gegenfläche fixierbar ist.

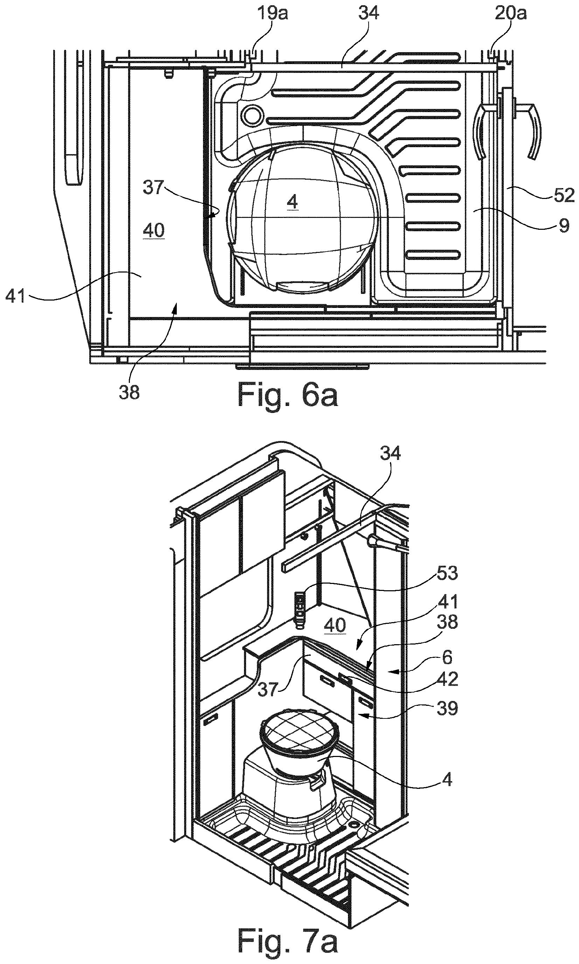

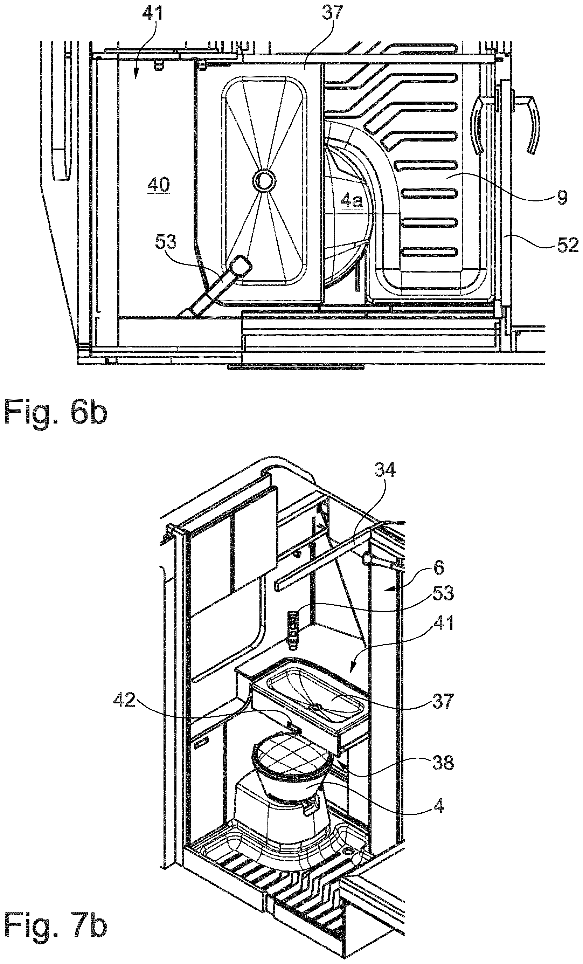

Die Figuren 6a, 6b bzw. 7a, 7b zeigen den Sanitärabschnitt 2 mit erfindungsgemäßem Waschbecken 37. Die Figuren 6a und 7a zeigen das erfindungsgemäße Waschbecken in einer Ruhestellung, in welcher es analog einer Schublade in einem Aufnahmekasten 38 untergebracht ist. Der Aufnahmekasten 38 umfasst Unterschränke 39 sowie eine, eine Ablagefläche 40 bildende Abschlussplatte 41 mit Wasserhahn 53. Zur Überführung des Waschbeckens 37 von einer Ruhestellung in eine Gebrauchsstellung wird dieses aus dem Aufnahmekasten 38 bis zum Erreichen eines Anschlages herausgezogen. Hierfür weist das Waschbecken 37 an einer Stirnseite einen Betätigungsgriff 42 auf. Im Gebrauchszustand befindet sich das Waschbecken 37 oberhalb der Toilette 4. Soll die Toilette 4 benutzt werden, wird das Waschbecken vorher wieder zurück in die Ruhestellung geschoben.

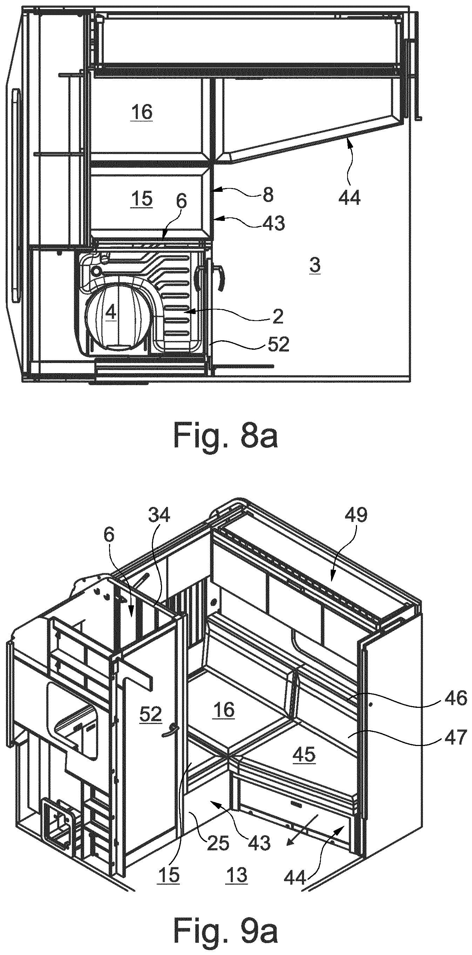

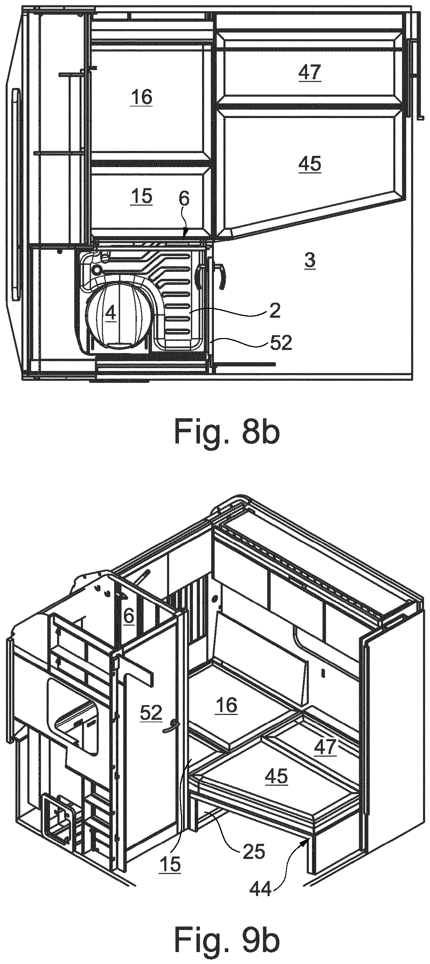

Wie in den Figuren 8a, 8b sowie 9a, 9b gut zu sehen ist, ist das horizontal verschiebbare Möbelelement 8 zur Verlängerung einer Liegefläche an einer Stirnseite 43 mit einem zweiten horizontal verschiebbaren Möbelelement 44 koppelbar. Dieses Möbelelement 44 lässt sich von einer Ein-Bett-Stellung, wie sie in den Figuren 8a und 9a dargestellt ist, in eine Zwei-Bett-Position verschieben, indem dieses in Richtung des Sanitärabschnitts 2 verschoben wird. Auch das Möbelelement 44 weist ein Polsterelement 45 auf, welches mit dem Polsterelement 15 des Möbelelements 8 fluchtet. Nach dem Verschieben des Möbelelements 44 in die Zwei-Bett-Position wird der dahinterliegende freie Raum durch Abklappen eines Klappelements 46 von einer vertikalen Stellung in eine horizontale Stellung geklappt. Auch auf dem Klappelement 46 ist ein Polsterelement 47 anordenbar, welches mit dem Polsterelementen 15, 16 sowie 45 fluchtet, so dass ein geräumiges Bett, welches eine Liegefläche für zwei Personen bietet, geschaffen werden kann.

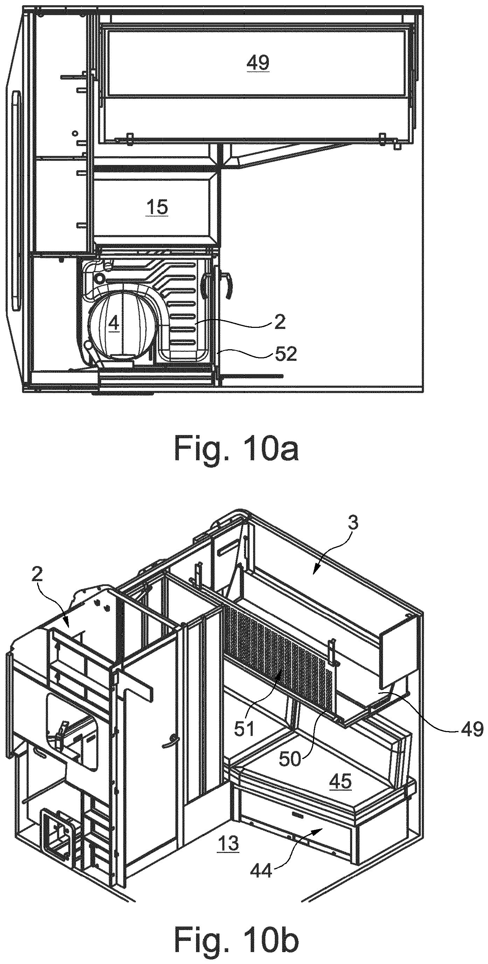

Des Weiteren kann an einer dem Basisabschnitt 18 des Trennwandelements 6 gegenüberliegenden Wand 48 ein Klappbett 49 angeordnet. In der Ruhestellung bildet das Klappbett 49 eine Art Hängeschrank, wie dies beispielsweise in der Figur 9a dargestellt ist. In der Gebrauchsstellung lässt sich das Klappbett 49 in eine horizontale Stellung abklappen, wie dies in den Figuren 10a und 10b dargestellt ist. Um zu verhindern, dass eine Person aus dem ausgeklappten Bett herunterfällt, ist an einer Längsseite 50 des Klappbetts 49 ein Sicherheitsnetz 51 angeordnet, welches an einer Fahrzeugdecke oder dergleichen fixierbar ist.

Zusammenfassend lässt sich feststellen, dass mit der gezeigten und beschriebenen Ausführungsform eines erfindungsgemäßen Campingfahrzeuges eine optimale Raumnutzung möglich ist. Gerade die Kombination aus dem erfindungsgemäßen Trennwandelement mit dem daran angeordneten Möbelelement, welches mit dem Trennwandelement bewegbar ist, in Verbindung mit dem erfindungsgemäßen Waschbecken, welches in der Art einer Schublade vorliegt, lässt sich der Raum im Sanitärabschnitt perfekt an die jeweils gewünschte Situation anpassen. Hinzu kommen bei der gezeigten Ausführungsform auch noch die flexibel positionierbaren Sitz- und Liegemöbel. Durch entsprechendes Positionieren dieser Elemente lässt sich der Wohnabschnitt schnell und einfach von einer Ein-Bett-Situation über eine Zwei-Bett-Position hin zu einer Drei-Bett-Position einrichten. Somit bietet die gezeigte und beschriebene Kombination der einzelnen Elemente eine einzigartige Flexibilität, bei welcher der Raum an die jeweils gewünschte Situation optimal anpassbar ist.

## Patentansprüche

1. Campingfahrzeug, insbesondere Wohnwagen, Wohnmobil, Campingbus oder dergleichen mit einem Fahrzeuginnenraum (1), welcher einen eine Dusche aufweisenden Sanitärabschnitt (2) und einen Wohnabschnitt (3) umfasst, wobei der Sanitärabschnitt (2) und der Wohnabschnitt (3) durch ein faltbares Trennwandelement (6) mindestens teilweise voneinander abtrennbar sind, wobei das Trennwandelement (6) an seiner Außenseite (7) mit einem horizontal verschiebbaren Möbelelement (8) des Wohnabschnitts (3) verbunden ist und durch Auffalten von einer Ruhestellung, in der eine Duschfläche (10) vom verschiebbaren Möbelelement (8) mindestens teilweise überdeckt ist und sich im Bereich des Wohnabschnitts (3) befindet, in eine Duschstellung, in welcher das Trennwandelement (6) die sich nun im Sanitärabschnitt (2) befindende Duschfläche (10) mindestens teilweise umgrenzt und das verschiebbare Möbelelement (8) außerhalb der Duschfläche (10) angeordnet ist, überführbar ist, wobei das Möbelelement (8) beim Auffalten des Trennwandelements (6) aus dem Bereich der Duschfläche (10) bewegt und beim Zusammenfalten des Trennwandelements (6) in den Bereich der Duschfläche (10) zurückbewegt wird.

2. Campingfahrzeug nach Anspruch 1, **dadurch gekennzeichnet, dass** das verschiebbare Möbelelement (8) beim Überführen des Trennwandelements (6) von einer Ruhestellung in eine Duschstellung in, über oder unter ein benachbart angeordnetes, insbesondere fahrzeugfest angeordnetes zweites Möbelelement, insbesondere eine Sitz- oder Liegebank (17) bewegt wird.

3. Campingfahrzeug nach einem der Ansprüche 1 oder 2, **dadurch gekennzeichnet, dass** das Trennwandelement (6) einen mit dem horizontal verschiebbaren Möbelelement (8) des Wohnabschnitts (3) verbundenen Basisabschnitt (18) sowie zwei gelenkig mit dem Basisabschnitt (18) verbundene Seitenabschnitte (19, 20) umfasst, welche Seitenabschnitte (19, 20) vorzugsweise jeweils zwei gelenkig miteinander verbundene Teilabschnitte (19a, 19b; 20a, 20b) umfassen, wobei ein erster Teilabschnitt (19a) eines ersten Seitenabschnitts (19) mit einem fahrzeugfest angeordneten Wandelement (12) gelenkig verbunden ist und ein erster Teilabschnitt (20a) eines zweiten Seitenabschnitts (20) mit einem weiteren fahrzeugfest angeordneten Halteelement, insbesondere Wandelement (21) gelenkig verbunden ist, wobei das Wandelement (12) vorzugsweise eine Türe (52) aufweist und mit dem Trennwandelement (6) vorzugsweise eine vollständige Trennwand zum Abtrennen des Sanitärabschnitts (2) vom Wohnabschnitt (3) bildet.

4. Campingfahrzeug nach Anspruch 3, **dadurch gekennzeichnet, dass** die Seitenabschnitte (19, 20) des Trennwandelements (6) mit dem Basisabschnitt (18) und dem fahrzeugfest angeordneten Wandelement (12) und dem Halteelement (21) über flexible, vorzugsweise wasserdichte Profile (22) schwenkbar verbunden sind, wobei vorzugsweise auch die Teilabschnitte (19a, 19b; 20a, 20b) eines Seitenabschnitts (19, 20) über derartige Profile (22) miteinander verbunden sind.

5. Campingfahrzeug nach einem der vorhergehenden Ansprüche, **dadurch gekennzeichnet, dass** das horizontal verschiebbare Möbelelement (8) mindestens eine, parallel zu einem Fahrzeugboden (13) angeordnete und vorzugsweise eine Sitzfläche bildende Horizontalplatte (14) umfasst, wobei die mindestens eine Horizontalplatte (14) vorzugsweise mit dem Trennwandelement (6) verbunden ist, wobei die mindestens eine Horizontalplatte (14) vorzugsweise in mindestens einer, vorzugsweise zwei parallel zum Fahrzeugboden (13) angeordneten Führungsschienen (29, 33) geführt ist.

6. Campingfahrzeug nach einem der vorhergehenden Ansprüche, insbesondere nach Anspruch 4, **dadurch gekennzeichnet, dass** das Trennwandelement (6) an seinem unteren Ende mit mindestens einem Stabilisierungselement, insbesondere mit zwei vertikal angeordneten Stabilisierungsplatten (25, 31) verbunden ist, wobei das Trennwandelement (6) an seinem oberen Ende vorzugsweise mit einer Stabilisierungstraverse (34) verbunden ist.

7. Campingfahrzeug nach einem der vorhergehenden Ansprüche, **dadurch gekennzeichnet, dass** das Trennwandelement (6) sowohl in der Ruhestellung als auch in der Duschstellung arretierbar ist, insbesondere mittels Magneten arretierbar und/oder fixierbar ist.

8. Campingfahrzeug nach einem der vorhergehenden Ansprüche, **gekennzeichnet durch** ein im Sanitärabschnitt (2) angeordnetes Waschbecken (37), welches analog einer Schublade von einer Ruhestellung, in welcher sich das Waschbecken (37) in einem Aufnahmekasten, vorzugsweise einem Aufnahmekasten (38) mit einer eine Ablagefläche (40) bildenden Deckplatte (41) befindet, in eine Gebrauchsstellung, in welcher sich das Waschbecken (37) mindestens teilweise außerhalb des Aufnahmekastens (38) befindet, bewegbar ist.

9. Campingfahrzeug nach einem der vorhergehenden Ansprüche, **dadurch gekennzeichnet, dass** das horizontal verschiebbare Möbelelement (8) zur Verlängerung einer Liegefläche an einer Stirnseite (43) mit einem zweiten horizontal verschiebbaren Möbelelement (44) koppelbar ist.

10. Campingfahrzeug nach einem der vorhergehenden Ansprüche, **gekennzeichnet durch** ein an einer dem Basisabschnitt (18) des Trennwandelements (6) gegenüberliegenden Wand (48) angeordnetes Klappbett (49), welches zur Überführung von einer Ruhestellung in eine Gebrauchsstellung abklappbar ist.

11. Trennwandelement für ein Campingfahrzeug, umfassend einen Basisabschnitt (18) sowie zwei gelenkig mit dem Basisabschnitt (18) verbundene Seitenabschnitte (19, 20), welche Seitenabschnitte (19, 20) jeweils zwei gelenkig miteinander verbundene Teilabschnitte (19a, 19b; 20a, 20b) umfassen, wobei ein erster Teilabschnitt (19a) eines ersten Seitenabschnitts (19) mit einem fahrzeugfest angeordneten Wandelement (12) gelenkig verbindbar ist und ein erster Teilabschnitt (20a) eines zweiten Seitenabschnitts (20) mit einem weiteren fahrzeugfest angeordneten Halteelement (21) gelenkig verbindbar ist.

12. Waschbecken für ein Campingfahrzeug, welches in einem Aufnahmekasten (38) angeordnet ist und von einer Ruhestellung, in welcher sich das Waschbecken (37) im Aufnahmekasten (38) befindet, in eine Gebrauchsstellung, in welcher sich das Waschbecken (37) mindestens teilweise außerhalb des Aufnahmekastens (38) befindet, analog einer Schublade bewegbar ist.
